(19) Europäisches Patentamt
European Patent Office
Office européen des brevets

(11) **EP 2 132 893 B1**

(12) **EUROPEAN PATENT SPECIFICATION**

(45) Date of publication and mention of the grant of the patent:
**20.05.2015 Bulletin 2015/21**

(51) Int Cl.:
*H04J 99/00* (2009.01)    *H04B 7/04* (2006.01)
*H04B 7/06* (2006.01)    *H04L 5/00* (2006.01)
*H04L 25/03* (2006.01)    *H04L 1/06* (2006.01)
*H04L 25/02* (2006.01)

(21) Application number: **08741299.5**

(22) Date of filing: **11.04.2008**

(86) International application number:
**PCT/KR2008/002054**

(87) International publication number:
**WO 2008/127035 (23.10.2008 Gazette 2008/43)**

(54) **MULTIPLE-ANTENNA SPACE MULTIPLEXING SYSTEM USING ENHANCEMENT SIGNAL DETECTION**

RAUMMULTIPLEXSYSTEM MIT MEHREREN ANTENNEN UNTER VERWENDUNG VON VERSTÄRKUNGSSIGNALERKENNUNG

SYSTÈME DE MULTIPLEXAGE SPATIAL À ANTENNES MULTIPLES UTILISANT LA DÉTECTION DE SIGNAL D'AUGMENTATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.04.2007 CN 200710095891**

(43) Date of publication of application:
**16.12.2009 Bulletin 2009/51**

(73) Proprietors:
• **Samsung Electronics Co., Ltd.**
**Suwon-si, Gyeonggi-do, 443-742 (KR)**
• **Beijing Samsung Telecom R & D Center Haidian District,**
**Beijing 100081 (CN)**

(72) Inventors:
• **CHEN, Peng**
**Beijing 100081 (CN)**

• **KIM, Young-Hak**
**Beijing 100081 (CN)**

(74) Representative: **Nederlandsch Octrooibureau P.O. Box 29720**
**2502 LS The Hague (NL)**

(56) References cited:
EP-A1- 1 542 388    WO-A1-2008/096038
KR-A- 20040 057 686    US-A1- 2005 078 665
US-A1- 2005 149 596    US-A1- 2007 077 969
US-A1- 2007 116 157

• **ZHONGDING LEI ET AL: "V-BLAST receivers for downlink MC-CDMA systems", 2003 IEEE 58TH VEHICULAR TECHNOLOGY CONFERENCE. VTC 2003-FALL (IEEE CAT. NO.03CH37484), vol. 2, 1 January 2003 (2003-01-01), page 866, XP055107256, ISSN: 1090-3038, DOI: 10.1109/VETECF.2003.1285144 ISBN: 978-0-78-037954-1**

**Description**

**BACKGROUND OF THE INVENTION**

1. Field of the Invention

This invention relates to transmission of information in a multiple-antenna communication system, especially relates to a technology of transmission and detection for a multiple-antenna signal.

2. Description of the Related Art

With limited spectrum resources, data transmission rate can be improved effectively by using the multiple-antenna space multiplexing BLAST technology.

The existing BLAST detection algorithm may be divided to linear detection (including Zero-Forcing detection (ZF), Minimum Mean Square Error Detection (MMSE)...) and nonlinear detection (including Zero-Forcing and signal Interference Cancellation detection (ZF-SIC), Minimum mean Square Error and signal Interference Cancellation detection (MMSE-SIC)...).

The linear detection method is easy to be realized relatively, while with poor performance. Compared with the linear detection method, the nonlinear detection method may improve the performance of the system. However the significantly increased complexity caused by iterative interference cancellation is the main difficulty for the nonlinear detection to be put into practice.

The following is a simple outline of linear and nonlinear BLAST detection algorithm.

**Linear detection algorithm**

Assuming the received signal is

$$\mathbf{r} = \mathbf{Hs} + \mathbf{n},$$

where, $\mathbf{H}$ is a $N \times M$ Channel Matrix, $\mathbf{s}$ is an $M$-dimensional transmission signal vector, $\mathbf{r}$ is a $N$-dimensional receipt signal vector, $\mathbf{n}$ is a $N$-dimensional independent white Gaussian noise, $M$ and $N$ are the numbers of system transmitting and receiving antennas.

For Zero-Forcing detection algorithm,

$$\hat{\mathbf{s}}_{ZF} = \left(\mathbf{H}^H \mathbf{H}\right)^{-1} \mathbf{H}^H \mathbf{r} = \mathbf{s} + \left(\mathbf{H}^H \mathbf{H}\right)^{-1} \mathbf{H}^H \mathbf{n}.$$

For MMSE (Minimum mean square error detection) algorithm,

$$\hat{\mathbf{s}}_{MMSE} = \left(\mathbf{H}^H \mathbf{H} + \sigma^2 \mathbf{I}\right)^{-1} \mathbf{H}^H \mathbf{r} = \mathbf{s} + \left(\mathbf{H}^H \mathbf{H} + \sigma^2 \mathbf{I}\right)^{-1} \mathbf{H}^H \mathbf{n}.$$

where, $\hat{\mathbf{s}}_{ZF}$ and $\hat{\mathbf{s}}_{MMSE}$ are $M$-dimensional vectors of detected signals under different algorithms respectively.

**Nonlinear detection algorithm**

Compared with the linear detection, the nonlinear detection technology may improve the system performance effectively at the price of increase of operation complexity.

The following gives an outline of sequential interference cancellation algorithm in the BLAST nonlinear detection algorithm. The basic principle of this algorithm is to remove the interference coming from the detected parts in the process of detecting the current signals, so as to reduce the impact that interference has on data with smaller signal-to-noise ratio. This principle is similar to the decision feedback equalization.

The following describes the detection process:

For ZF-SIC detector, it will defines that

$$\mathbf{G}_i = \mathbf{H}^\dagger = \left(\mathbf{H}^H \mathbf{H}\right)^{-1} \mathbf{H}^H ,$$

For MMSE-SIC detector, it will defines that

$$\mathbf{G}_i = \mathbf{H}^\dagger = \left(\mathbf{H}^H \mathbf{H} + \sigma\mathbf{I}\right)^{-1} \mathbf{H}^H .$$

After Process 1, a decision signal may be obtained:

$$\underline{\textbf{Process 1:}}\ k_i = \arg\min \left\| (\mathbf{G}_i)_j \right\|^2 \Rightarrow \mathbf{w}_{k_i} = (\mathbf{G}_i)_{k_i} \Rightarrow y_{k_i} = \mathbf{w}_{k_i}^T \mathbf{r}_i \Rightarrow \hat{a}_{k_i} = Q\left( y_{k_i} \right)$$

In the above process, $k_1$, $k_2$,···, $k_M$ form a sequence of transmitting antennas in the detection process.
Then, Process 2 is performed and the impact of the detected signals has been removed from the received signals. The new pseudo inverse matrix is determined and the new decision sequence is also determined.

$$\underline{\textbf{Process 2:}}\ \mathbf{r}_{i+1} = \mathbf{r}_i - \hat{a}_{k_i} (\mathbf{H})_{k_i} \Rightarrow \mathbf{G}_{i+1} = \mathbf{H}_{i+1}^\dagger \Rightarrow k_{i+1} = \arg\min_{j \notin \{k_1 \cdots k_i\}} \| (\mathbf{G}_{i+1})_j \|^2 \Rightarrow i \leftarrow i+1$$

Then a cyclical process is formed, and the cyclical process includes Process 1 and Process 2, the cyclical process is carrying out on the signals until $i = M$. Now, all signals have been determined, and the cyclical process is completed.
The BLAST linear detection method is easy to be realized relatively, while with poor performance. Compared with the linear detection method, the nonlinear detection method can improve the performance of the system. However the significantly increased complexity caused by the iterative interference cancellation is the main difficulty for the nonlinear detection to be put into practice.
ZHONGDING LEI ET AL: "V-BLAST receivers for downlink MC-CDMA systems", 2003 IEEE 58TH VEHICULAR TECHNOLOGY CONFERENCE. VTC 2003-FALL (IEEE CAT. NO.03CH37484), vol., 2, (2003-01-01), page 866, discloses a downlink MIMO MC-CDMA system for very high data rate transmission and a linear MMSE V-BLAST detector per subcarrier for said system, wherein the linear MMSE detector has better performance than the ZF detector and iterative V-BLAST detectors with ZF/MMSE.
US 2007/077969 A1 discloses maximum likelihood detection of signals in a MIMO receiver, wherein a system transformation is obtained by selecting a weighting matrix that, when linearly transforming a channel utilized for wireless communication, results in a particular transformed triangular matrix.
EP 1 542 388 A1 discloses apparatus and methods for transmission and reception in MIMO and MISO channel based wireless systems, wherein a data sequence is transmitted from a first antenna; then interleaved; at least a part of the interleaved sequence is transmitted from a second antenna spaced apart from the first antenna, the part of the interleaved sequence being transmitted simultaneously with a part of the data sequence transmitted from the first antenna.

## SUMMARY OF THE INVENTION

This invention provides a BLAST system using enhancement signal detection. Complexity of this system is close to a BLAST system using a traditional linear detector and the performance of system according to present invention is better than the BLAST system using sequential interference cancellation nonlinear detector.
In order to realize the above object, a multiple-antenna space multiplexing system using enhancement signal detection comprising:

    a code modulation module for coding and modulating bit information;
    a signal transmission module for transmitting the modulated signals;
    a signal reception module for receiving the signals;
    a signal form transform module for transforming form of channel matrix **H** and the received signal vector **r**;

a signal detection module for detecting the received signals;
a signal reconstruction module for reconstructing the detection results of in the signal detection module, and obtaining a detected signal $\tilde{\mathbf{s}}$;
a demodulation decoding module for demodulating and decoding the output of the signal reconstruction module, and outputting bit information.

Compared with the ZF and the ZF SIC detection method, the BER performance of this system in this invention are improved significantly. Compared with the above detection methods, in this invention, this invention has more advantages in considering the system performance, improvement and realization complexity.

## BRIEF DESCRIPTION OF THE DRAWINGS

Figure 1 shows system architecture of transmitting end according to this invention;
Figure 2 shows system architecture of receiving end and the signaling flow end according to this invention;

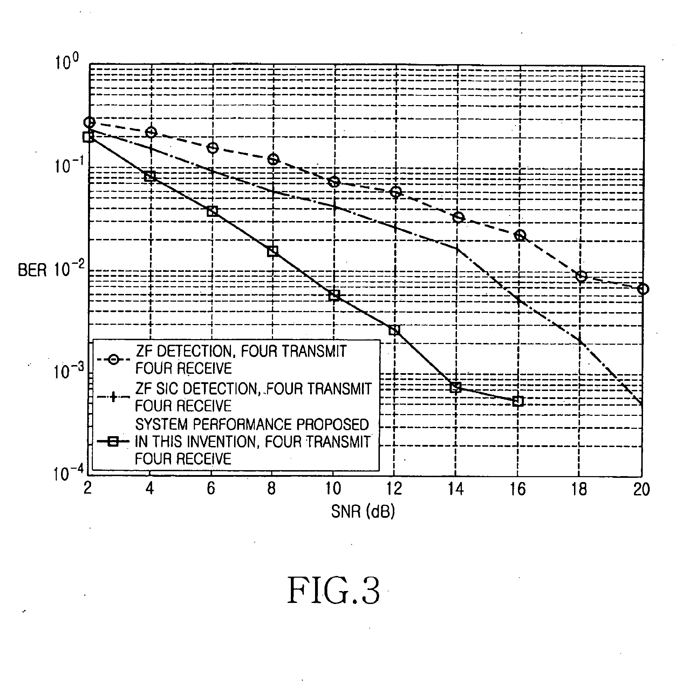

Figure 3 shows bit error rate (BER) performance.

## DETAILED DESCRIPTION OF THE PREFERRED EMBODIMENTS

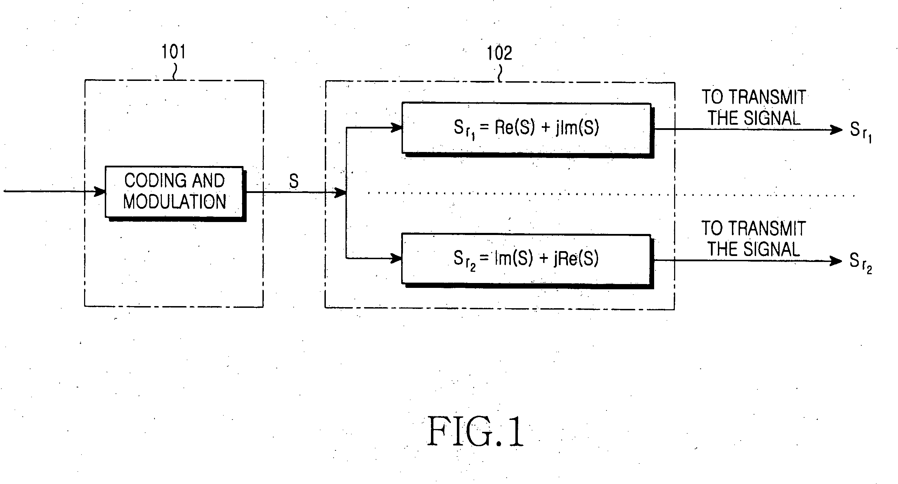

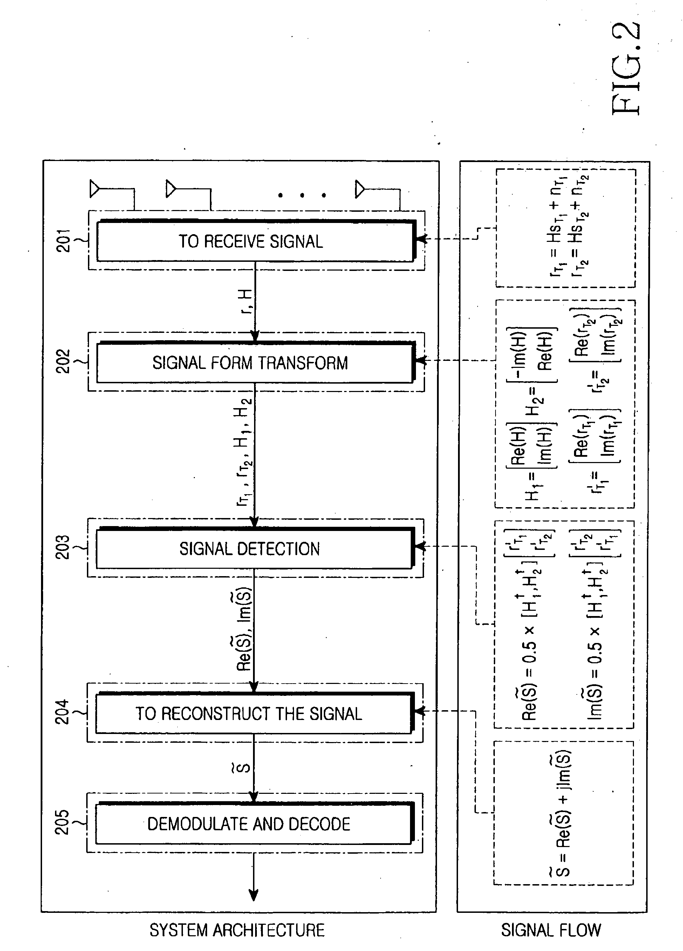

The system architecture and signaling flow according to this invention are shown in Figure 1 and Figure 2.
An outline of this system architecture is described in the followings:

Code modulation module for coding and modulating the bit information.

Signal transmission module for transmitting the modulated signals. The principles of this module consist in that: the signal waiting to be transmitted is $\mathbf{s}$, assuming that quasi-static fading channel $\mathbf{H}$ remains the same between adjacent time block $T_1$ and $T_2$. In time block $T_1$, the transmission signal is $\mathbf{s}_{T_1} = \mathrm{Re}(\mathbf{s}) + j\mathrm{Im}(\mathbf{s})$ , in time block $T_2$, the transmission signal is $\mathbf{s}_{T_2} = \mathrm{Im}(\mathbf{s}) + j\,\mathrm{Re}(\mathbf{s})$. Re(s) indicates a real part of the complex signal, Im(s) indicates an imaginary part of the complex signal.
Signal reception module for receiving the signals, $\mathbf{r}_{T_1} = \mathbf{Hs}_{T_1} + \mathbf{n}_{T_1}$, $\mathbf{r}_{T_2} = \mathbf{Hs}_{T_2} + \mathbf{n}_{T_2}$.
Signal form transform module for transforming the form of channel matrix H and the received signal vector $\mathbf{r}$ :

$$\mathbf{H}_1 = \begin{bmatrix} \mathrm{Re}(\mathbf{H}) \\ \mathrm{Im}(\mathbf{H}) \end{bmatrix}, \; \mathbf{H}_2 = \begin{bmatrix} -\mathrm{Im}(\mathbf{H}) \\ \mathrm{Re}(\mathbf{H}) \end{bmatrix}, \; \mathbf{r}'_{T_1} = \begin{bmatrix} \mathrm{Re}(\mathbf{r}_{T_1}) \\ \mathrm{Im}(\mathbf{r}_{T_1}) \end{bmatrix}, \; \mathbf{r}'_{T_2} = \begin{bmatrix} \mathrm{Re}(\mathbf{r}_{T_2}) \\ \mathrm{Im}(\mathbf{r}_{T_2}) \end{bmatrix}.$$

Signal detection module for detecting the received signals: $\mathrm{Re}(\tilde{\mathbf{s}}) = 0.5 \times \begin{bmatrix} \mathbf{H}_1^* & \mathbf{H}_2^* \end{bmatrix} \begin{bmatrix} \mathbf{r}'_{T_1} \\ \mathbf{r}'_{T_2} \end{bmatrix}$,

$$\mathrm{Im}(\tilde{\mathbf{s}}) = 0.5 \times \begin{bmatrix} \mathbf{H}_1^* & \mathbf{H}_2^* \end{bmatrix} \begin{bmatrix} \mathbf{r}'_{T_1} \\ \mathbf{r}'_{T_1} \end{bmatrix}$$ Re($\tilde{\mathbf{s}}$) is a real part of the detected signal, Im($\tilde{\mathbf{s}}$) is an imaginary part of the detected signal.

Signal reconstruction module for reconstructing the signal detection results, then obtaining the detected signal $\tilde{\mathbf{s}}$. The reconstruction principle: $\tilde{\mathbf{s}} = \mathrm{Re}(\tilde{\mathbf{s}}) + j\,\mathrm{Im}(\tilde{\mathbf{s}})$.
Demodulation and decoding module for demodulating and decoding the detected signal, then outputting bit information.
According to the above process, in the process of signal detection of this system, a pseudo inverse detection matrix $\begin{bmatrix} \mathrm{Re}(\mathbf{H}) & -\mathrm{Im}(\mathbf{H}) \\ \mathrm{Im}(\mathbf{H}) & \mathrm{Re}(\mathbf{H}) \end{bmatrix}^+$ in conventional detection algorithms is degenerated to $\begin{bmatrix} \mathrm{Re}(\mathbf{H}) \\ \mathrm{Im}(\mathbf{H}) \end{bmatrix}^+$ and $\begin{bmatrix} -\mathrm{Im}(\mathbf{H}) \\ \mathrm{Re}(\mathbf{H}) \end{bmatrix}^+$ , which will reduce noise raise in the process of detection obviously. At the same time, compared with the conventional linear detection algorithm, the complexity of this system has not been raised obviously. The complexity is far lower than the sequential interference cancellation nonlinear detection algorithm
The following is to prove the rationality of the signaling process in the system according to this invention:

In the following proving process, [ ]$^+$ means matrix pseudo inverse, [ ]$^H$ means matrix transpose conjugate.

At the receiving end, assuming

$$\mathbf{r}_{T_1} = \mathbf{H}\mathbf{s}_{T_1} + \mathbf{n}_{T_1}, \quad \mathbf{r}_{T_2} = \mathbf{H}\mathbf{s}_{T_2} + \mathbf{n}_{T_2} \quad (1)$$

Performing equivalent transformation on expression (1)

$$\mathbf{r}_{T_1}' = \begin{bmatrix} \mathrm{Re}(\mathbf{r}_{T_1}) \\ \mathrm{Im}(\mathbf{r}_{T_1}) \end{bmatrix} = \begin{bmatrix} \mathrm{Re}(\mathbf{H}) & -\mathrm{Im}(\mathbf{H}) \\ \mathrm{Im}(\mathbf{H}) & \mathrm{Re}(\mathbf{H}) \end{bmatrix} \begin{bmatrix} \mathrm{Re}(\mathbf{s}_{T_1}) \\ \mathrm{Im}(\mathbf{s}_{T_1}) \end{bmatrix} + \begin{bmatrix} \mathrm{Re}(\mathbf{n}_{T_1}) \\ \mathrm{Im}(\mathbf{n}_{T_1}) \end{bmatrix}$$
$$= \begin{bmatrix} \mathrm{Re}(\mathbf{H}) \\ \mathrm{Im}(\mathbf{H}) \end{bmatrix} \mathrm{Re}(\mathbf{s}) + \begin{bmatrix} -\mathrm{Im}(\mathbf{H}) \\ \mathrm{Re}(\mathbf{H}) \end{bmatrix} \mathrm{Im}(\mathbf{s}) + \begin{bmatrix} \mathrm{Re}(\mathbf{n}_{T_1}) \\ \mathrm{Im}(\mathbf{n}_{T_1}) \end{bmatrix} \quad (2)$$

$$\mathbf{r}_{T_2}' = \begin{bmatrix} \mathrm{Re}(\mathbf{r}_{T_2}) \\ \mathrm{Im}(\mathbf{r}_{T_2}) \end{bmatrix} = \begin{bmatrix} \mathrm{Re}(\mathbf{H}) & -\mathrm{Im}(\mathbf{H}) \\ \mathrm{Im}(\mathbf{H}) & \mathrm{Re}(\mathbf{H}) \end{bmatrix} \begin{bmatrix} \mathrm{Re}(\mathbf{s}_{T_2}) \\ \mathrm{Im}(\mathbf{s}_{T_2}) \end{bmatrix} + \begin{bmatrix} \mathrm{Re}(\mathbf{n}_{T_2}) \\ \mathrm{Im}(\mathbf{n}_{T_2}) \end{bmatrix}$$
$$= \begin{bmatrix} \mathrm{Re}(\mathbf{H}) \\ \mathrm{Im}(\mathbf{H}) \end{bmatrix} \mathrm{Im}(\mathbf{s}) + \begin{bmatrix} -\mathrm{Im}(\mathbf{H}) \\ \mathrm{Re}(\mathbf{H}) \end{bmatrix} \mathrm{Re}(\mathbf{s}) + \begin{bmatrix} \mathrm{Re}(\mathbf{n}_{T_2}) \\ \mathrm{Im}(\mathbf{n}_{T_2}) \end{bmatrix} \quad (3)$$

Then

$$\mathbf{H}_1^+ \mathbf{r}_{T_1}' = \begin{bmatrix} \mathrm{Re}(\mathbf{H}) \\ \mathrm{Im}(\mathbf{H}) \end{bmatrix}^+ \begin{bmatrix} \mathrm{Re}(\mathbf{r}_{T_1}) \\ \mathrm{Im}(\mathbf{r}_{T_1}) \end{bmatrix} = \begin{bmatrix} \mathrm{Re}(\mathbf{H}) \\ \mathrm{Im}(\mathbf{H}) \end{bmatrix}^+ \left( \begin{bmatrix} \mathrm{Re}(\mathbf{H}) \\ \mathrm{Im}(\mathbf{H}) \end{bmatrix} \mathrm{Re}(\mathbf{s}) + \begin{bmatrix} -\mathrm{Im}(\mathbf{H}) \\ \mathrm{Re}(\mathbf{H}) \end{bmatrix} \mathrm{Im}(\mathbf{s}) + \begin{bmatrix} \mathrm{Re}(\mathbf{n}_{T_1}) \\ \mathrm{Im}(\mathbf{n}_{T_1}) \end{bmatrix} \right)$$
$$= \mathrm{Re}(\mathbf{s}) + \begin{bmatrix} \mathrm{Re}(\mathbf{H}) \\ \mathrm{Im}(\mathbf{H}) \end{bmatrix}^+ \begin{bmatrix} -\mathrm{Im}(\mathbf{H}) \\ \mathrm{Re}(\mathbf{H}) \end{bmatrix} \mathrm{Im}(\mathbf{s}) + \begin{bmatrix} \mathrm{Re}(\mathbf{H}) \\ \mathrm{Im}(\mathbf{H}) \end{bmatrix}^+ \begin{bmatrix} \mathrm{Re}(\mathbf{n}_{T_1}) \\ \mathrm{Im}(\mathbf{n}_{T_1}) \end{bmatrix} \quad (4)$$

$$\mathbf{H}_2^+ \mathbf{r}_{T_1}' = \begin{bmatrix} -\mathrm{Im}(\mathbf{H}) \\ \mathrm{Re}(\mathbf{H}) \end{bmatrix}^+ \begin{bmatrix} \mathrm{Re}(\mathbf{r}_{T_1}) \\ \mathrm{Im}(\mathbf{r}_{T_1}) \end{bmatrix} = \begin{bmatrix} -\mathrm{Im}(\mathbf{H}) \\ \mathrm{Re}(\mathbf{H}) \end{bmatrix}^+ \left( \begin{bmatrix} \mathrm{Re}(\mathbf{H}) \\ \mathrm{Im}(\mathbf{H}) \end{bmatrix} \mathrm{Re}(\mathbf{s}) + \begin{bmatrix} -\mathrm{Im}(\mathbf{H}) \\ \mathrm{Re}(\mathbf{H}) \end{bmatrix} \mathrm{Im}(\mathbf{s}) + \begin{bmatrix} \mathrm{Re}(\mathbf{n}_{T_1}) \\ \mathrm{Im}(\mathbf{n}_{T_1}) \end{bmatrix} \right)$$
$$= \begin{bmatrix} -\mathrm{Im}(\mathbf{H}) \\ \mathrm{Re}(\mathbf{H}) \end{bmatrix}^+ \begin{bmatrix} \mathrm{Re}(\mathbf{H}) \\ \mathrm{Im}(\mathbf{H}) \end{bmatrix} \mathrm{Re}(\mathbf{s}) + \mathrm{Im}(\mathbf{s}) + \begin{bmatrix} -\mathrm{Im}(\mathbf{H}) \\ \mathrm{Re}(\mathbf{H}) \end{bmatrix}^+ \begin{bmatrix} \mathrm{Re}(\mathbf{n}_{T_1}) \\ \mathrm{Im}(\mathbf{n}_{T_1}) \end{bmatrix} \quad (5)$$

$$\mathbf{H}_1^+ \mathbf{r}_{T_2}' = \begin{bmatrix} \mathrm{Re}(\mathbf{H}) \\ \mathrm{Im}(\mathbf{H}) \end{bmatrix}^+ \begin{bmatrix} \mathrm{Re}(\mathbf{r}_{T_2}) \\ \mathrm{Im}(\mathbf{r}_{T_2}) \end{bmatrix} = \begin{bmatrix} \mathrm{Re}(\mathbf{H}) \\ \mathrm{Im}(\mathbf{H}) \end{bmatrix}^+ \left( \begin{bmatrix} \mathrm{Re}(\mathbf{H}) \\ \mathrm{Im}(\mathbf{H}) \end{bmatrix} \mathrm{Im}(\mathbf{s}) + \begin{bmatrix} -\mathrm{Im}(\mathbf{H}) \\ \mathrm{Re}(\mathbf{H}) \end{bmatrix} \mathrm{Re}(\mathbf{s}) + \begin{bmatrix} \mathrm{Re}(\mathbf{n}_{T_2}) \\ \mathrm{Im}(\mathbf{n}_{T_2}) \end{bmatrix} \right)$$
$$= \mathrm{Im}(\mathbf{s}) + \begin{bmatrix} \mathrm{Re}(\mathbf{H}) \\ \mathrm{Im}(\mathbf{H}) \end{bmatrix}^+ \begin{bmatrix} -\mathrm{Im}(\mathbf{H}) \\ \mathrm{Re}(\mathbf{H}) \end{bmatrix} \mathrm{Re}(\mathbf{s}) + \begin{bmatrix} \mathrm{Re}(\mathbf{H}) \\ \mathrm{Im}(\mathbf{H}) \end{bmatrix}^+ \begin{bmatrix} \mathrm{Re}(\mathbf{n}_{T_2}) \\ \mathrm{Im}(\mathbf{n}_{T_2}) \end{bmatrix} \quad (6)$$

$$H_2^+ r_{T_2}' = \begin{bmatrix} -\mathrm{Im}(H) \\ \mathrm{Re}(H) \end{bmatrix}^+ \begin{bmatrix} \mathrm{Re}(r_{T_1}) \\ \mathrm{Im}(r_{T_1}) \end{bmatrix} = \begin{bmatrix} -\mathrm{Im}(H) \\ \mathrm{Re}(H) \end{bmatrix}^+ \left( \begin{bmatrix} \mathrm{Re}(H) \\ \mathrm{Im}(H) \end{bmatrix} \mathrm{Im}(s) + \begin{bmatrix} -\mathrm{Im}(H) \\ \mathrm{Re}(H) \end{bmatrix} \mathrm{Re}(s) + \begin{bmatrix} \mathrm{Re}(n_{T_1}) \\ \mathrm{Im}(n_{T_1}) \end{bmatrix} \right)$$

$$= \begin{bmatrix} -\mathrm{Im}(H) \\ \mathrm{Re}(H) \end{bmatrix}^+ \begin{bmatrix} \mathrm{Re}(H) \\ \mathrm{Im}(H) \end{bmatrix} \mathrm{Im}(s) + \mathrm{Re}(s) + \begin{bmatrix} -\mathrm{Im}(H) \\ \mathrm{Re}(H) \end{bmatrix}^+ \begin{bmatrix} \mathrm{Re}(n_{T_1}) \\ \mathrm{Im}(n_{T_1}) \end{bmatrix} \qquad (7)$$

the following is to prove that

$$\begin{bmatrix} \mathrm{Re}(H) \\ \mathrm{Im}(H) \end{bmatrix}^+ \begin{bmatrix} -\mathrm{Im}(H) \\ \mathrm{Re}(H) \end{bmatrix} = -\begin{bmatrix} -\mathrm{Im}(H) \\ \mathrm{Re}(H) \end{bmatrix}^+ \begin{bmatrix} \mathrm{Re}(H) \\ \mathrm{Im}(H) \end{bmatrix} \qquad (8)$$

$$\begin{bmatrix} \mathrm{Re}(H) \\ \mathrm{Im}(H) \end{bmatrix}^+ \begin{bmatrix} -\mathrm{Im}(H) \\ \mathrm{Re}(H) \end{bmatrix}$$

$$= \left( \begin{bmatrix} \mathrm{Re}^H(H) & \mathrm{Im}^H(H) \end{bmatrix} \begin{bmatrix} \mathrm{Re}(H) \\ \mathrm{Im}(H) \end{bmatrix} \right)^{-1} \begin{bmatrix} \mathrm{Re}^H(H) & \mathrm{Im}^H(H) \end{bmatrix} \begin{bmatrix} -\mathrm{Im}(H) \\ \mathrm{Re}(H) \end{bmatrix} \qquad (9)$$

$$= \begin{bmatrix} \mathrm{Re}^H(H)\mathrm{Re}(H) + \mathrm{Im}^H(H)\mathrm{Im}(H) \end{bmatrix}^{-1} \begin{bmatrix} -\mathrm{Re}^H(H)\mathrm{Im}(H) + \mathrm{Im}^H(H)\mathrm{Re}(H) \end{bmatrix}$$

$$\begin{bmatrix} -\mathrm{Im}(H) \\ \mathrm{Re}(H) \end{bmatrix}^+ \begin{bmatrix} \mathrm{Re}(H) \\ \mathrm{Im}(H) \end{bmatrix}$$

$$= \left( \begin{bmatrix} -\mathrm{Im}^H(H) & \mathrm{Re}^H(H) \end{bmatrix} \begin{bmatrix} -\mathrm{Im}(H) \\ \mathrm{Re}(H) \end{bmatrix} \right)^{-1} \begin{bmatrix} -\mathrm{Im}^H(H) & \mathrm{Re}^H(H) \end{bmatrix} \begin{bmatrix} \mathrm{Re}(H) \\ \mathrm{Im}(H) \end{bmatrix} \qquad (10)$$

$$= \begin{bmatrix} \mathrm{Im}^H(H)\mathrm{Im}(H) + \mathrm{Re}^H(H)\mathrm{Re}(H) \end{bmatrix}^{-1} \begin{bmatrix} -\mathrm{Im}^H(H)\mathrm{Re}(H) + \mathrm{Re}^H(H)\mathrm{Im}(H) \end{bmatrix}$$

Expression (8) may be proved from expression (9) and (10).
Then

$$0.5 \times \begin{bmatrix} H_1^+ & H_2^+ \end{bmatrix} \begin{bmatrix} r_{T_1}' \\ r_{T_2}' \end{bmatrix} = 0.5 \times \begin{bmatrix} H_1^+ r_{T_1}' + H_2^+ r_{T_2}' \end{bmatrix}$$

$$= 0.5 \times \left( \mathrm{Re}(s) + \begin{bmatrix} \mathrm{Re}(H) \\ \mathrm{Im}(H) \end{bmatrix}^+ \begin{bmatrix} -\mathrm{Im}(H) \\ \mathrm{Re}(H) \end{bmatrix} \mathrm{Im}(s) + \begin{bmatrix} \mathrm{Re}(H) \\ \mathrm{Im}(H) \end{bmatrix}^+ \begin{bmatrix} \mathrm{Re}(n_{T_1}) \\ \mathrm{Im}(n_{T_1}) \end{bmatrix} + \right. \qquad (11)$$

$$\left. \begin{bmatrix} -\mathrm{Im}(H) \\ \mathrm{Re}(H) \end{bmatrix}^+ \begin{bmatrix} \mathrm{Re}(H) \\ \mathrm{Im}(H) \end{bmatrix} \mathrm{Im}(s) + \mathrm{Re}(s) + \begin{bmatrix} -\mathrm{Im}(H) \\ \mathrm{Re}(H) \end{bmatrix}^+ \begin{bmatrix} \mathrm{Re}(n_{T_1}) \\ \mathrm{Im}(n_{T_1}) \end{bmatrix} \right)$$

From expression (8) and (11), we may get:

$$\mathrm{Re}(\tilde{s}) = 0.5 \times \begin{bmatrix} H_1^+ & H_2^+ \end{bmatrix} \begin{bmatrix} r_{T_1}' \\ r_{T_2}' \end{bmatrix} \qquad (12)$$

Similarly,

$$\mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}_{T_1}' \\ \mathbf{r}_{T_1}' \end{bmatrix} \tag{13}$$

The detected signal is

$$\tilde{\mathbf{s}} = \mathrm{Re}(\tilde{\mathbf{s}}) + j\,\mathrm{Im}(\tilde{\mathbf{s}}) \tag{14}$$

This embodiment uses a multiple antenna BLAST communication system consisting of four transmit four receive antennas. The channel is a quasi-static flat Rayleigh fading channel. Assuming channel remains the same between the continuous time block $T_1$ and $T_2$. In the embodiment, the system according to this invention and the BLAST system using ZF detection and ZF SIC detector are all carried out for performance simulation. To ensure a fair performance comparison, on the transmitting end, the system according to this invention uses 16QAM modulation, while ZF and ZF SIC algorithm transmitting end use QPSK modulation.

In the simulation, 1/3 Turbo code is used for coding and decoding in all algorithms.

## Claims

1. A multiple-antenna space multiplexing system using enhancement signal detection comprising:

   a signal reception module (201) for receiving signals coded and modulated by a transmitter via an antenna;
   a signal form transform module (202) for transforming form of a channel matrix **H** and the received signal vector **r,** wherein a principle of form transforming of the channel matrix H and the received signal vector **r** is:

   $$\mathbf{H}_1 = \begin{bmatrix} \mathrm{Re}(\mathbf{H}) \\ \mathrm{Im}(\mathbf{H}) \end{bmatrix}, \ \mathbf{H}_2 = \begin{bmatrix} -\mathrm{Im}(\mathbf{H}) \\ \mathrm{Re}(\mathbf{H}) \end{bmatrix}, \ \mathbf{r}_{T_1}' = \begin{bmatrix} \mathrm{Re}(\mathbf{r}_{T_1}) \\ \mathrm{Im}(\mathbf{r}_{T_1}) \end{bmatrix}, \ \mathbf{r}_{T_2}' = \begin{bmatrix} \mathrm{Re}(\mathbf{r}_{T_2}) \\ \mathrm{Im}(\mathbf{r}_{T_2}) \end{bmatrix}, \ \text{where } \mathrm{Re}(H), \mathrm{Re}(r_{T_1}) \text{ and}$$

   $\mathrm{Re}(r_{T_2})$ indicate a real part of complex signal, $\mathrm{Im}(H)$, $\mathrm{Im}(r_{T_1})$ and $\mathrm{Im}(r_{T_2})$ indicate an imaginary part of complex signal;

   a signal detection module (203) for detecting the received signals;
   a signal reconstruction module (204) for reconstructing the detection results of in the signal detection module, and obtaining a detected signal $\tilde{\mathbf{s}}$;
   a demodulation decoding module (205) for demodulating and decoding the output of the signal reconstruction module, and outputting bit information.

2. The system according to Claim 1, wherein a principle for the signal detection module detecting the received signals is:

   $$\mathrm{Re}(\tilde{\mathbf{s}}) = 0.5 \times \begin{bmatrix} \mathbf{H}_1^+ & \mathbf{H}_2^+ \end{bmatrix} \begin{bmatrix} \mathbf{r}_{T_1}' \\ \mathbf{r}_{T_1}' \end{bmatrix}, \ \mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}_{T_1}' \\ \mathbf{r}_{T_1}' \end{bmatrix} \ \mathrm{Re}(\tilde{\mathbf{s}}) \text{ is a real part of the detected signal,}$$

   $\mathrm{Im}(\tilde{\mathbf{s}})$ is an imaginary part of the detected signal.

3. The system according to Claim 1, wherein a principle for the signal reconstruction module reconstructing the signal detection results is:

   $$\mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}_{T_1}' \\ \mathbf{r}_{T_1}' \end{bmatrix}.$$

4. The system according to Claim 1, wherein the antenna is a multiple input multiple output (MIMO) antenna.

**5.** A multiple-antenna space multiplexing system supporting enhancement signal detection comprising:

a code modulation module (101) for coding and modulating bit information; and
a signal transmission module (102) for transmitting the modulated signals,
wherein the signal transmission module transmits signals as following principles:

a signal waiting to be transmitted is **s**, assuming that quasi-static fading channel **H** remains the same between adjacent time block $T_1$ and $T_2$;
in time block $T_1$, the transmission signal is $\mathbf{s}_{T_1}$ = Re(**s**) + $j$ Im(**s**); where
in time block $T_2$, the transmission signal is $\mathbf{s}_{T_2}$ = Im(s) + $j$ Re(**s**), where Re(**s**) indicates a real part of complex signal, Im(**s**) indicates an imaginary part of complex signal.

**6.** A method performed in a multiple-antenna space multiplexing system of one of claims 1 to 5.

**Patentansprüche**

**1.** Mehrantennen-Raummultiplexsystem, das Verstärkungssignaldetektion verwendet, das Folgendes umfasst:

ein Signalempfangsmodul (201) zum Empfangen von Signalen, die durch einen Sender codiert und moduliert worden sind, über eine Antenne;
ein Signalformtransformationsmodul (202) zum Transformieren von Form einer Kanalmatrix **H** und des Empfangssignalvektors **r,** wobei eine Gesetzmäßigkeit des Formtransformierens der Kanalmatrix H und des Empfangssignalvektors r Folgende ist:

$$\mathbf{H}_1 = \begin{bmatrix} \mathrm{Re}(\mathbf{H}) \\ \mathrm{Im}(\mathbf{H}) \end{bmatrix}, \ \mathbf{H}_2 = \begin{bmatrix} -\mathrm{Im}(\mathbf{H}) \\ \mathrm{Re}(\mathbf{H}) \end{bmatrix}, \ \mathbf{r}'_{T_1} = \begin{bmatrix} \mathrm{Re}(\mathbf{r}_{T_1}) \\ \mathrm{Im}(\mathbf{r}_{T_1}) \end{bmatrix}, \ \mathbf{r}'_{T_2} = \begin{bmatrix} \mathrm{Re}(\mathbf{r}_{T_2}) \\ \mathrm{Im}(\mathbf{r}_{T_2}) \end{bmatrix}, \ \text{wobei Re(H), Re}(r_{T_1}) \text{ und}$$

Re($r_{T_2}$) einen Realteil komplexen Signales angeben, Im(H), Im($r_{T_1}$) und Im($r_{T_2}$) einen Imaginärteil komplexen Signales angeben;

ein Signaldetektionsmodul (203) zum Detektieren der Empfangssignale;
ein Signalrekonstmktionsmodul (204) zum Rekonstruieren der Detektionsergebnisse des Signaldetektionsmodules und Erlangen eines detektierten Signales $\tilde{\mathbf{s}}$;
ein Demodulationsdecodiermodul (205) zum Demodulieren und Decodieren der Ausgabe des Signalrekonstmktionsmodules und Ausgeben von Bitinformationen.

**2.** System nach Anspruch 1, wobei eine Gesetzmäßigkeit für das Signaldetektionsmodul, das die Empfangssignale detektiert, Folgende ist:

$$\mathrm{Re}(\tilde{\mathbf{s}}) = 0.5 \times \begin{bmatrix} \mathbf{H}_1^+ & \mathbf{H}_2^+ \end{bmatrix} \begin{bmatrix} \mathbf{r}'_{T_1} \\ \mathbf{r}'_{T_2} \end{bmatrix}, \ \mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}'_{T_2} \\ \mathbf{r}'_{T_1} \end{bmatrix}$$ Re($\tilde{\mathbf{s}}$) ist ein Realteil des detektierten Signales, Im($\tilde{\mathbf{s}}$) ist ein Imaginärteil des detektierten Signales.

**3.** System nach Anspruch 1, wobei eine Gesetzmäßigkeit für das Signalrekonstruktionsmodul, das die Signaldetektionsergebnisse rekonstruiert, Folgende ist:

$$\mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}'_{T_2} \\ \mathbf{r}'_{T_1} \end{bmatrix}.$$

**4.** System nach Anspruch 1, wobei die Antenne eine Multiple-Input-Multiple-Output-Antenne (MIMO-Antenne) ist.

**5.** Mehrantennen-Raummultiplexsystem, das Verstärkungssignaldetektion unterstützt, das Folgendes umfasst:

ein Codemodulationsmodul (101) zum Codieren und Modulieren von Bitinformationen und
ein Signalsendemodul (102) zum Senden der modulierten Signale,
wobei das Signalsendemodul Signale als folgende Gesetzmäßigkeiten sendet:

ein Signal, das darauf wartet, gesendet zu werden, ist **s**, wobei angenommen wird, dass der quasistatische Fadingkanal **H** zwischen benachbarten Zeitblöcken $T_1$ und $T_2$ derselbe bleibt;
in Zeitblock $T_1$ ist das Sendesignal $\mathbf{s}_{T_1}$ = Re(**s**) + $j$ Im(**s**);
in Zeitblock $T_2$ ist das Sendesignal $\mathbf{s}_{T_2}$ = Im(**s**)+ $j$ Re(**s**); wobei Re(**s**) einen Realteil komplexen Signales abgibt, Im(**s**) einen Imaginärteil komplexen Signales angibt.

6. Verfahren, das in einem Mehrantennen-Raummultiplexsystem nach einem der Ansprüche 1 bis 5 durchgeführt wird.

## Revendications

1. Système de multiplexage d'espace d'antennes multiples utilisant une détection de signal d'amélioration, comprenant :

un module de réception de signal (201) pour recevoir des signaux codés et modulés par un émetteur par l'intermédiaire d'une antenne ;
un module de transformation de forme de signal (202) pour transformer une forme d'une matrice de canal **H** et du vecteur de signal reçu **r,** dans lequel un principe de transformation de forme de la matrice de canal **H** et du vecteur de signal reçu r est :

$$\mathbf{H}_1 = \begin{bmatrix} \mathrm{Re}(\mathbf{H}) \\ \mathrm{Im}(\mathbf{H}) \end{bmatrix}, \ \mathbf{H}_2 = \begin{bmatrix} -\mathrm{Im}(\mathbf{H}) \\ \mathrm{Re}(\mathbf{H}) \end{bmatrix}, \ \mathbf{r}'_{T_1} = \begin{bmatrix} \mathrm{Re}(\mathbf{r}_{T_1}) \\ \mathrm{Im}(\mathbf{r}_{T_1}) \end{bmatrix}, \ \mathbf{r}'_{T_2} = \begin{bmatrix} \mathrm{Re}(\mathbf{r}_{T_2}) \\ \mathrm{Im}(\mathbf{r}_{T_2}) \end{bmatrix}, \ \text{où Re(H), Re}(r_{T_1}) \text{ et Re}(r_{T_2})$$

indiquent une partie réelle du signal complexe, Im(H), Im($r_{T_1}$) et Im($r_{T_2}$) indiquent une partie imaginaire du signal complexe ;

un module de détection de signal (203) pour détecter les signaux reçus ;
un module de reconstruction de signal (204) pour reconstruire les résultats de détection dans le module de détection de signal, et obtenir un signal détecté $\tilde{\mathbf{s}}$ ;
un module de décodage de démodulation (205) pour démoduler et décoder la sortie du module de reconstruction de signal et délivrer des informations de bits.

2. Système selon la revendication 1, dans lequel un principe pour le module de détection de signal détectant le signal reçu est :

$$\mathrm{Re}(\tilde{\mathbf{s}}) = 0.5 \times \begin{bmatrix} \mathbf{H}_1^+ & \mathbf{H}_2^+ \end{bmatrix} \begin{bmatrix} \overline{\mathbf{r}'_{T_1}} \\ \mathbf{r}'_{T_2} \end{bmatrix}, \ \mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}'_{T_2} \\ \overline{\mathbf{r}'_{T_1}} \end{bmatrix} \ \mathrm{Re}(\tilde{\mathbf{s}}) \ \mathrm{Re}(\tilde{\mathbf{s}}) \text{ est une partie réelle du signal}$$

détecté, Im($\tilde{\mathbf{s}}$) est une partie imaginaire du signal détecté.

3. Système selon la revendication 1, dans lequel un principe pour le module de reconstruction de signal reconstruisant les résultats de détection de signal est :

$$\mathrm{Im}(\tilde{\mathbf{s}}) = 0.5 \times \begin{bmatrix} \mathbf{H}_1^+ & \mathbf{H}_2^+ \end{bmatrix} \begin{bmatrix} \mathbf{r}'_{T_2} \\ \mathbf{r}'_{T_1} \end{bmatrix}.$$

4. Système selon la revendication 1, dans lequel l'antenne est une antenne à entrées multiples et sorties multiples (MIMO).

5. Système de multiplexage d'espace d'antennes multiples prenant en charge une détection de signal d'amélioration comprenant :

un module de modulation de code (101) pour coder et moduler des informations de bits ; et
un module de transmission de signal (102) pour transmettre les signaux modulés,
dans lequel le module de transmission de signal transmet des signaux selon les principes suivants :

un signal en attente de transmission est **s**, en supposant que le canal d'évanouissement quasi-statique **H** reste le même entre des blocs de temps adjacents $T_1$ et $T_2$ ;
dans le bloc de temps $T_1$, le signal de transmission est $\mathbf{s}_{T_1} = \mathrm{Re}(\mathbf{s}) + j\,\mathrm{Im}(\mathbf{s})$ ;
dans le bloc de temps $T_2$, le signal de transmission est $\mathbf{s}_{T_2}\,\mathrm{Im}(\mathbf{s}) + j\,\mathrm{Re}(\mathbf{s})$, où $\mathrm{Re}(\mathbf{s})$ indique une partie réelle du signal complexe, $\mathrm{Im}(\mathbf{s})$ indique une partie imaginaire du signal complexe.

6. Procédé effectué dans un système de multiplexage d'espace d'antennes multiples selon l'une des revendications 1 à 5.

FIG.1

**FIG.2**

**SYSTEM ARCHITECTURE**

201 — TO RECEIVE SIGNAL

$r, H$

202 — SIGNAL FORM TRANSFORM

$r_{T_1}, r_{T_2}, H_1, H_2$

203 — SIGNAL DETECTION

$Re(\tilde{S}), Im(\tilde{S})$

204 — TO RECONSTRUCT THE SIGNAL

$\tilde{S}$

205 — DEMODULATE AND DECODE

**SIGNAL FLOW**

$$r_{T_1} = Hs_{T_1} + n_{T_1}$$
$$r_{T_2} = Hs_{T_2} + n_{T_2}$$

$$H_1 = \begin{bmatrix} Re(H) \\ Im(H) \end{bmatrix} \quad H_2 = \begin{bmatrix} -Im(H) \\ Re(H) \end{bmatrix}$$

$$r'_{T_1} = \begin{bmatrix} Re(r_{T_1}) \\ Im(r_{T_1}) \end{bmatrix} \quad r'_{T_2} = \begin{bmatrix} Re(r_{T_2}) \\ Im(r_{T_2}) \end{bmatrix}$$

$$Re(\tilde{S}) = 0.5 \times [H_1^\dagger, H_2^\dagger] \begin{bmatrix} r'_{T_1} \\ r'_{T_2} \end{bmatrix}$$

$$Im(\tilde{S}) = 0.5 \times [H_1^\dagger, H_2^\dagger] \begin{bmatrix} r'_{T_2} \\ r'_{T_1} \end{bmatrix}$$

$$\tilde{S} = Re(\tilde{S}) + jIm(\tilde{S})$$

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007077969 A1

- EP 1542388 A1

**Non-patent literature cited in the description**

- **ZHONGDING LEI et al.** V-BLAST receivers for downlink MC-CDMA systems. *IEEE 58TH VEHICULAR TECHNOLOGY CONFERENCE. VTC 2003-FALL,* 01 January 2003, vol. 2, 866